# FASCICULE DE BREVET EUROPEEN

(11) **EP 2 085 268 B1**
(45) Date de publication et mention de la délivrance du brevet: **14.08.2019**
(21) Numéro de dépôt: 09290026.5
(22) Date de dépôt: 13.01.2009
(51) Int. Cl.: H02J 7/00, H02J 9/06, B60R 16/03

(54) **Système électronique pour batterie**
Elektronisches System für Batterie
Electronic system for battery

(30) Priorité: 29.01.2008 FR 0800464
(43) Date de publication de la demande: 05.08.2009
(73) Titulaire: Saft Groupe S.A., 93170 Bagnolet (FR)
(72) Inventeur: Vasselin, Benoît, 33560 Carbon Blanc (FR); Desprez, Philippe, 33320 Le Taillan Médoc (FR); Genin, Philippe, 33200 Bordeaux (FR); Morin, Christophe, 86190 Béruges (FR); Benjamin, Sébastien, 33850 Léognan (FR); Ardilouze, Jérémie, 33110 Le Bouscat (FR); Bonnaud, Francis, 33200 Bordeaux (FR); Nieto, Isidro, 33160 Saint Médard en Jalles (FR)
(74) Mandataire: Hirsch & Associés

(56) Documents cités:
- EP-A- 0 695 017
- JP-A- 6 113 469
- JP-A- 10 201 129
- JP-A- H09 154 241
- JP-A- 2000 224 769
- US-A- 5 293 076
- US-A- 5 978 236
- US-A- 6 074 775
- US-A1- 2001 035 735
- US-A1- 2005 007 071
- US-A1- 2005 057 100
- US-A1- 2007 103 118
- US-A1- 2007 273 216

## Description

La présente invention se rapporte à un système électronique pour batterie comprenant au moins un accumulateur étanche.

Un générateur électrochimique ou accumulateur (ces deux termes sont équivalents) est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé.

La batterie est destinée à fournir de l'énergie électrique à une application extérieure ; un circuit de charge est donc généralement prévu auquel la batterie peut être branchée pour recharger les accumulateurs. Afin d'augmenter la puissance délivrée, il est connu d'associer plusieurs accumulateurs étanches entre eux pour former une batterie. La batterie comporte alors une ou plusieurs branches parallèles d'accumulateurs reliés en série. La gestion de la charge et de la décharge de la batterie peut alors être organisée et contrôlée pour équilibrer la charge et décharge des différents accumulateurs les uns par rapport aux autres. Un circuit de contrôle, plus ou moins évolué selon les applications, est généralement prévu pour être associé à la batterie.

JP-A-2000/224769 décrit un système de batterie capable d'alimenter en énergie de secours. Le système de batterie comprend un circuit d'alimentation en courant alternatif et un circuit d'alimentation en courant continu. Une charge est connectée au circuit d'alimentation en courant alternatif et une charge est connectée au circuit d'alimentation en courant continu. Une batterie est connectée au circuit d'alimentation en courant continu par un circuit de charge/commande de décharge. Une unité de commande est adaptée à implémenter sélectivement un mode de charge ou une mode de décharge.

Le document US2007/103118 décrit un système électronique pour batterie rechargeable à accumulateur électrochimique étanche de type Lithium-Ion et destinée à fournir une énergie électrique à une application comprenant une alimentation principale, le système électronique comprenant: un circuit de charge de la batterie comprenant un chargeur, le circuit de charge étant une branche bidirectionnelle; un premier circuit de décharge de la batterie parallèle au circuit de charge et comprenant un commutateur de décharge; une diode de décharge disposée dans le circuit de charge en parallèle du chargeur; une unité électronique de contrôle adaptée à contrôler le chargeur; dans lequel l'unité de contrôle: assure un maintien de la charge de la batterie tant que celle-ci n'est pas sollicitée en décharge; interrompt la charge de la batterie lors qu'une sollicitation de l'application est détectée, et dans lequel la diode de décharge permet un passage d'un courant de décharge durant une phase de transition de fermeture du commutateur de décharge.

Pour des applications à des batteries de secours, il est important que les accumulateurs soient chargés à leur pleine capacité avant leur utilisation, mais surtout que l'énergie soit instantanément disponible.

Les aéronefs ou autres véhicules de transport utilisent généralement des batteries au plomb ou de type Nickel Cadmium (NiCd) pour assurer le démarrage du véhicule et une alimentation de secours. Ces batteries peuvent rester connectées à l'alimentation principale et être chargées tant qu'elles ne sont pas sollicitées ; aucune surcharge des accumulateurs n'est à craindre. Or, il est apparu souhaitable de pouvoir utiliser des batteries de type Li-Ion comme batterie de secours, notamment pour des applications aux aéronefs afin de pouvoir bénéficier d'une réduction de poids et d'une facilité d'entretien propre à ce type de batterie. Cependant, les batteries de type Li-Ion requièrent une gestion de charge spécifique afin d'éviter toute surcharge. Il a en effet été observé que la surcharge d'accumulateurs Li-Ion provoque un vieillissement prématuré de la batterie. Il n'est donc pas possible de remplacer directement une batterie NiCd ou plomb par une batterie Li-Ion ; un système électronique de gestion de la batterie doit être prévu pour contrôler la charge et l'équilibrage des accumulateurs Li-Ion.

En outre, il est souhaitable qu'une batterie de secours puisse délivrer de l'énergie électrique à l'application à laquelle elle est destinée de manière rapide, fiable et sans discontinuité lorsque l'alimentation principale de l'application est défaillante.

Il existe donc un besoin pour une batterie qui puisse être chargée en permanence sans risque de surcharge tant qu'elle n'est pas sollicitée par l'application extérieure et qui puisse fournir de l'énergie électrique sans discontinuité lorsqu'elle est sollicitée.

A cet effet, l'invention propose un système électronique pour batterie, notamment pour batterie de secours, qui permet de contrôler la charge des accumulateurs afin de maintenir un état de charge optimal sans surcharge et qui permet d'assurer une décharge fiable sans interruption de puissance lorsque la batterie est sollicitée.

Plus particulièrement, l'invention concerne un système selon la revendication 1.

Le circuit de charge peut comprendre un commutateur de charge disposé en série avec le chargeur et une diode disposée en parallèle du chargeur, la diode permettant la décharge de la batterie lorsque le commutateur de charge est en position fermée et le chargeur interrompu.

Selon un autre mode de réalisation, l'élément de continuité de la décharge est une diode de décharge disposée dans le circuit de décharge en parallèle du commutateur de décharge.

Selon un mode de réalisation, le circuit de charge ne permet pas un passage de courant supérieur à 80A.

Selon un mode de réalisation, l'unité de contrôle actionne le commutateur de décharge en position ouverte lorsque le potentiel de la batterie devient inférieur au potentiel de l'application.

Selon un mode de réalisation, le système comprend en outre un deuxième circuit de décharge de la batterie parallèle au premier circuit de décharge et comprenant un deuxième commutateur de décharge maintenu en position fermée, une résistance limitant le passage du courant de décharge et une diode interdisant la charge de la batterie à travers le deuxième commutateur de décharge.

Selon des modes de réalisation, la résistance du deuxième circuit de décharge peut limiter le courant de décharge à 5A ; et le deuxième commutateur de décharge peut être maintenu en position fermée tant que l'état de charge de la batterie est supérieur à 20%.

Selon un mode de réalisation, le système comprend en outre un troisième circuit de décharge de la batterie parallèle au premier circuit de décharge et comprenant un troisième commutateur de décharge actionné en position fermée lorsqu'une phase de démarrage de l'application est détectée. Le troisième commutateur de décharge peut permettre un passage de courant supérieur à 1500A

Selon un mode de réalisation, le système comprend en outre un commutateur de sécurité disposé en série avec le circuit de charge et en série avec le premier circuit de décharge et actionné en position ouverte lorsqu'une situation dangereuse pour l'utilisateur de la batterie est détectée. Le commutateur de sécurité est disposé en parallèle avec le deuxième circuit de décharge.

L'invention concerne aussi une batterie rechargeable comprenant au moins un accumulateur électrochimique étanche et un système électronique selon l'invention. L'accumulateur étanche peut être de type Lithium-Ion. Une telle batterie peut être utilisée pour un aéronef par exemple.

D'autres caractéristiques et avantages de l'invention apparaîtront à la lecture de la description qui suit, donnée à titre d'exemple et en référence aux figures qui montrent :
- Figure 1, une vue schématique du système électronique selon un premier mode de réalisation de l'invention ;
- Figure 2, une vue schématique du système électronique selon un deuxième mode de réalisation de l'invention ;
- Figure 3, une vue schématique du système électronique selon un troisième mode de réalisation de l'invention ;
- Figure 4, une vue schématique du système électronique selon un quatrième mode de réalisation de l'invention ;
- Figure 5, une vue schématique du système électronique selon un cinquième mode de réalisation de l'invention ;
- Figure 6, des graphes montrant un état des commutateurs, l'allure du courant délivré par la batterie et l'allure de la tension aux bornes de la batterie lors d'une simulation du démarrage de l'application avec une batterie comprenant un système électronique selon le quatrième mode de réalisation de l'invention ;
- Figure 7, des graphes montrant un état des commutateurs, l'allure du courant délivré par la batterie et l'allure de la tension aux bornes de la batterie lors d'une simulation en mode secours avec une batterie comprenant un système électronique selon le quatrième mode de réalisation de l'invention.

L'invention concerne un système électronique pour batterie comprenant au moins un accumulateur électrochimique rechargeable. La batterie est reliée en permanence à un bus de puissance d'une alimentation principale de l'application à laquelle elle est destinée. Le système électronique de l'invention contrôle la charge des accumulateurs afin d'éviter toute surcharge et garantit la continuité de la disponibilité en puissance électrique lorsque la batterie est sollicitée en décharge.

L'invention s'applique notamment à une batterie de secours, c'est-à-dire une batterie destinée à fournir de l'énergie électrique à une application extérieure en cas de défaillance de l'alimentation principale. La batterie peut également être sollicitée pour un démarrage d'une unité auxiliaire de puissance (APU pour « Auxialiary Power Unit » en anglais) de l'application. L'application peut être un véhicule, par exemple un avion.

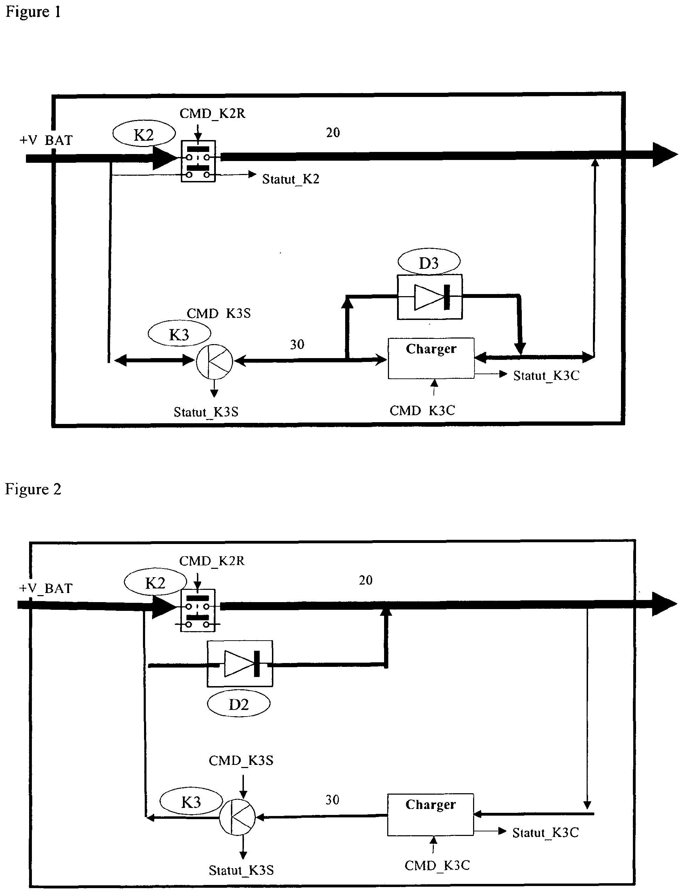

Les figures 1 et 2 illustrent schématiquement un premier et deuxième modes de réalisation de l'invention. Le système électronique des figures 1 et 2 comprend un circuit de décharge 20 et un circuit de charge 30 qui sont en parallèles, c'est-à-dire que la batterie peut être chargée en permanence à partir de l'alimentation principale et peut fournir immédiatement une énergie électrique lorsqu'elle est sollicité en décharge par l'application. Le système électronique de l'invention comprend aussi un élément de continuité de la décharge constitué d'une diode D2 ou D3 et qui peut être disposé dans le circuit de charge (figure 1) ou dans le circuit de décharge (figure 2).

Le circuit de décharge 20 comprend une ligne de puissance permettant la circulation d'un courant électrique de la batterie vers l'application et un commutateur K2 disposé sur cette ligne de puissance. Le commutateur K2 est maintenu en position ouverte tant que la batterie n'est pas sollicitée en décharge par l'application et il est actionné en position fermée lorsqu'une énergie électrique est requise par l'application. On entend par « position ouverte » du commutateur une position interdisant tout passage de courant et par « position fermée » du commutateur une position autorisant un passage de courant. Le circuit de décharge 20 peut comprendre en outre une diode D2 qui est disposée en parallèle du commutateur K2 (figure 2). Cette diode D2 empêche la circulation de tout courant de charge de l'application vers la batterie et permet d'assurer la continuité de disponibilité de puissance lors de la phase de transition avant la fermeture du commutateur K2.

Le circuit de charge 30 comprend un chargeur et peut comprendre une diode D3 en anti-parallèle. Selon le mode de réalisation illustré sur la figure 1, le circuit de charge 30 est une branche bidirectionnelle, c'est-à-dire qu'il permet la circulation d'un courant électrique de l'application vers la batterie pour la charge mais également la circulation d'un courant électrique de la batterie vers l'application pour assurer une décharge durant une phase de transition. La diode D2 du circuit de décharge 20 n'est alors plus nécessaire.

Sur la figure 1, la décharge de transition par le circuit de charge est assurée par la diode D3 ; mais cette diode peut être remplacée par un circuit approprié intégré au chargeur. Selon un mode de réalisation, le chargeur peut intégrer un simple commutateur K3C actionné en position fermée pour permettre la circulation d'un courant de charge et actionné en position ouverte lorsque la charge doit être interrompue ; la diode D3 assure alors la circulation d'un courant de décharge durant la phase de transition, c'est-à-dire le temps pour le commutateur K2 de passer en position fermée. Selon un autre mode de réalisation, le chargeur peut intégrer un circuit plus complexe permettant une circulation bidirectionnelle du courant selon la commande appliquée. La limitation de courant lors de la décharge peut être assurée par un commutateur K3S. Ce commutateur assure en outre une redondance du commutateur K3C en cas de défaillance du chargeur lors de la phase de charge de la batterie. Ce commutateur K3S est optionnel et dépend du niveau de sécurité souhaité.

Le circuit de décharge 30 ne permet pas le passage de courants forts, par exemple des courants supérieurs à 80A, qui sont nécessaires lorsque l'alimentation principale est défaillante. Le commutateur de décharge K3S n'est pas dimensionné pour de forts courants et le passage à travers la diode D3 introduit une impédance qui limite le courant disponible pour l'application. La décharge à travers le circuit de charge 30 est donc transitoire et permet seulement de garantir une disponibilité en courant immédiate en attendant que le commutateur de décharge K2 soit actionné en position fermée.

Selon le mode de réalisation illustré sur la figure 2, la décharge de transition est assurée par la diode D2 qui assure la circulation d'un courant de décharge durant la phase de transition, c'est-à-dire le temps pour le commutateur K2 de passer en position fermée. Dans cette variante de réalisation, le circuit de charge 30 n'est plus une branche bidirectionnelle, c'est-à-dire qu'il ne permet que la circulation d'un courant électrique de l'application vers la batterie pour la charge.

Le système électronique selon l'invention comprend aussi une unité électronique de contrôle qui supervise le fonctionnement de la batterie afin de réguler la charge des accumulateurs et autoriser la décharge de la batterie lorsque l'application le requiert. Une telle unité de contrôle reçoit des informations provenant de l'application elle-même (potentiel de l'alimentation principale, température, alarme pour passage en mode secours et autres), de capteurs disposés dans la batterie (par exemple tension, courant et température de chaque accumulateur) et des informations quant au statut (position ouverte ou position fermée) des différents commutateurs du système électronique. L'unité électronique de contrôle peut ainsi assurer un maintien de la charge de la batterie sans risque de surcharge ; elle peut aussi détecter un besoin en énergie électrique de l'application et commander l'arrêt du chargeur et l'actionnement du commutateur K2 du circuit de décharge.

Le chargeur du circuit de charge 30 est relié au réseau de l'alimentation principale de l'application. Par exemple, dans le cas d'une utilisation comme batterie d'avion ou de drone, le chargeur est relié au réseau 28V de l'aéronef afin d'assurer un maintien de la charge de la batterie à environ 100% de sa capacité. Dans le cas d'une batterie de type Li-Ion, le chargeur limite le courant de charge pour éviter tout dépôt de lithium sur les électrodes. L'unité électronique commande non seulement le commutateur du chargeur K3C mais également le commutateur de charge K3S si présent et assure un contrôle de la tension de charge à environ 4V par élément électrochimique de la batterie. L'unité électronique reçoit un signal quant au statut (position ouverte ou position fermée) des différents commutateurs K3S_statut, K3C_statut et K2_statut.

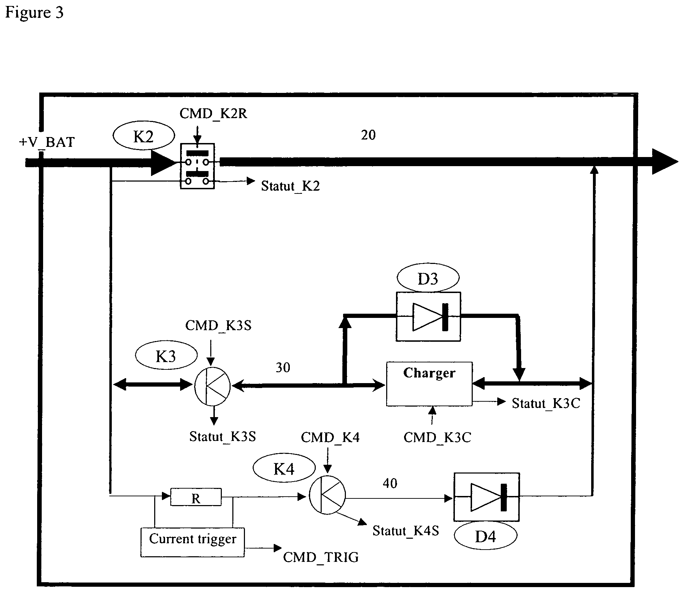

La figure 3 illustre schématiquement un troisième mode de réalisation de l'invention. Les éléments identiques au premier mode de réalisation portent les mêmes numéros de références et ne sont pas décrits à nouveau.

La figure 3 montre un deuxième circuit de décharge 40 de la batterie parallèle au premier circuit de décharge 20. Ce deuxième circuit de décharge 40 comprend un deuxième commutateur de décharge K4 qui est maintenu en position fermée et une résistance R qui limite le passage du courant à travers ce deuxième circuit de décharge. Une diode D4 interdit la charge de la batterie à travers ce deuxième commutateur de décharge K4.

Ce deuxième circuit de décharge 40 permet une utilisation de la batterie sous courants faibles, notamment lorsque l'électronique des branches principales de charge 30 et de décharge 20 est endormie en mode « stand-by », c'est-à-dire avec les commutateurs K2, K3C et K3S en positions ouvertes. Par exemple, pour une utilisation comme batterie d'avion, lorsque l'appareil est au sol, le deuxième circuit de décharge 40 peut être utilisé pour alimenter des veilleuses lors de l'entretien de l'appareil sans pour autant réveiller toute l'électronique de contrôle de la batterie qui consommerait plus d'énergie électrique que les besoins requis par l'application. La résistance R, associée à un déclencheur en courant « current trigger », permet de limiter le passage d'un courant de décharge dans cette branche 40 à environ 5A. Un tel courant est donc insignifiant lorsque la batterie est déchargée via sa branche principale 20 mais suffisant pour des applications d'entretien et de maintenance au sol. Un tel courant représente également une fuite négligeable lorsque la batterie est chargée par le circuit de charge 30. Si un appel en courant plus fort est requis par l'application, l'unité électronique de contrôle du système réveille les autres branches et actionne le commutateur de décharge K2 en position fermée.

Le deuxième commutateur de décharge K4 reste toujours en position fermée ; l'unité électronique de contrôle n'a donc pas à l'actionner en position fermée et cette branche de décharge 40 peut être utilisée lorsque le système électronique est en mode « stand by ». Le deuxième commutateur de décharge K4 sera actionné en position ouverte si un état de charge de la batterie (SOC : State of Charge) inférieur à 20% est détecté afin de supprimer tout courant de fuite.

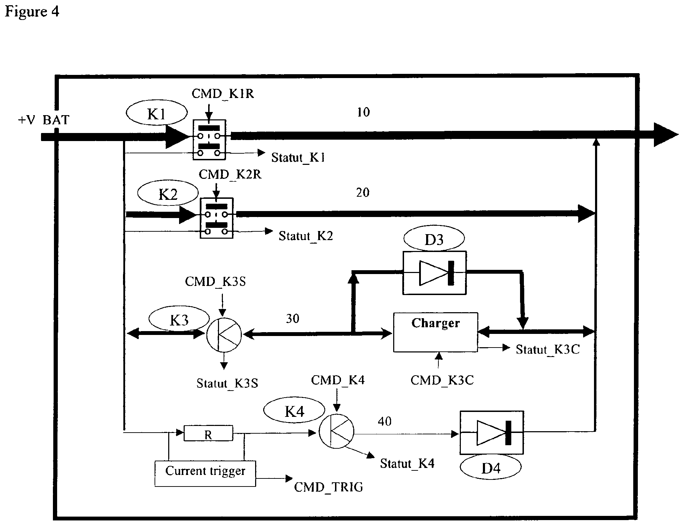

La figure 4 illustre schématiquement un quatrième mode de réalisation de l'invention. Les éléments identiques aux premier et deuxième modes de réalisation portent les mêmes numéros de références et ne sont pas décrits à nouveau.

La figure 4 montre un troisième circuit de décharge 10 de la batterie parallèle au premier circuit de décharge 20. Ce troisième circuit de décharge 10 comprend un troisième commutateur de décharge K1 qui est maintenu en position ouverte et actionné en position fermée lorsque l'application sollicite la batterie pour une phase de démarrage. La figure 4 montre le troisième circuit de décharge 10 ajouté au deuxième circuit de décharge 40 illustré sur la figure 3, mais il est entendu que ce troisième circuit de décharge 10 pourrait être ajouté aux systèmes illustrés sur les figures 1 ou 2 sans que le deuxième circuit de décharge 40 ne soit prévu.

Lors d'une phase de démarrage de l'unité auxiliaire de puissance APU, de très forts courants sont requis sur une courte période ; par exemple des courants pouvant atteindre 1500A sur moins de 10 secondes sont appelés à circuler de la batterie vers l'application. De tels courants créent des arcs électriques importants lors de l'ouverture des commutateurs et accélèrent le vieillissement des commutateurs. Ce troisième circuit de décharge 10 permet de préserver la fiabilité des commutateurs, notamment du commutateur de décharge K2 du premier circuit de décharge 20 qui sera utilisé dans un mode secours de la batterie. Le troisième commutateur K1 peut avoir les mêmes spécifications techniques que le commutateur K2 du premier circuit de décharge 20, ou présenter des caractéristiques de robustesse plus importantes. Le troisième commutateur K1 permet un passage de courant de plus de 1500A et le commutateur K2 du circuit de décharge principal 20 peut être préservé d'un passage de tels courants forts.

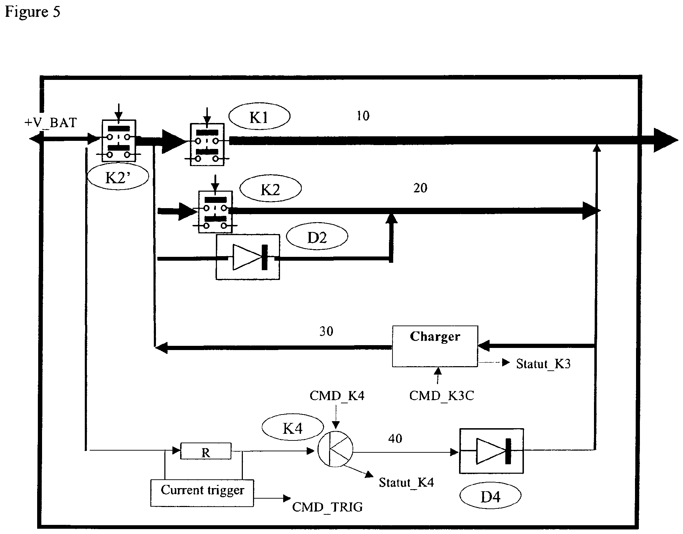

La figure 5 illustre schématiquement un cinquième mode de réalisation de l'invention. Les éléments identiques aux trois modes de réalisation décrits plus haut portent les mêmes numéros de références et ne sont pas décrits à nouveau.

Selon ce cinquième mode de réalisation, un commutateur de sécurité K2' a été ajouté en série avec le circuit de charge 30 et en série avec le premier circuit de décharge 20. La figure 5 montre les quatre branches du système de la figure 4 sauf que la décharge de transition est assurée par la diode D2 du circuit de décharge 20 au lieu d'être assurée par la diode D3 du circuit de charge 30. Il est cependant entendu que la décharge de transition pourrait être assurée par la diode D3 du circuit de charge 30 comme sur la figure 4. Il est entendu que ce commutateur de sécurité K2' pourrait aussi être ajouté aux systèmes illustrés sur l'une des figures 1 à 3.

Le cas échéant, le commutateur de sécurité K2' est en série avec le troisième circuit de décharge 10 de courants forts mais il est en parallèle avec le deuxième circuit de décharge 40 de courants faibles. Le commutateur de sécurité K2' est maintenu en position fermée et actionné en position ouverte si un défaut de la batterie est détecté et met l'utilisateur en situation dangereuse. Il constitue une redondance des commutateurs K1, K2, K3C et K3S.

En mode « stand by », le commutateur de sécurité K2' est également en position ouverte. C'est pourquoi le deuxième circuit de décharge 40 de courants faibles doit être parallèle à ce commutateur de sécurité K2'. La présence du commutateur de sécurité K2' permet également d'assurer la décharge de transition soit par la diode D2 du circuit de décharge 20 soit par la diode D3 du circuit de charge 30. En effet, sans la présence de ce commutateur de sécurité K2', la présence d'une diode D2 parallèle au commutateur de décharge K2 garantirait un courant de décharge en mode « stand-by » et éliminerait le besoin d'une deuxième branche de décharge 40.

Sur la figure 5, le commutateur de décharge K3S a été retiré du circuit de décharge 30. En effet, comme la décharge de transition est assurée par la diode D2 du circuit de charge 20, le commutateur K3S n'est plus nécessaire pour assurer une limitation du courant de décharge à travers le circuit de charge 30. En outre, la redondance du commutateur K3C en cas de défaillance du chargeur lors de la phase de charge de la batterie peut être assurée par le commutateur de sécurité K2'. Bien entendu, le commutateur de décharge K3S pourrait néanmoins être conservé selon le niveau de sécurité souhaité.

En effet, en cas de défaillance de l'un de ces commutateurs K1, K2, K3S ou K3C qui resterait en position fermée alors que l'alimentation principale de l'application est opérationnelle, une utilisation mettant la batterie en situation dangereuse pourrait survenir et détériorer la batterie qui ne serait alors plus opérationnelle en mode secours. Le commutateur K2' serait alors actionné en position ouverte par l'électronique de contrôle. K2' reste dans une position fermée tant qu'aucune situation dangereuse pour l'utilisateur n'est pas détectée, sauf lors des périodes de stockage de la batterie.

Le système électronique selon l'invention fonctionne de la manière suivante.

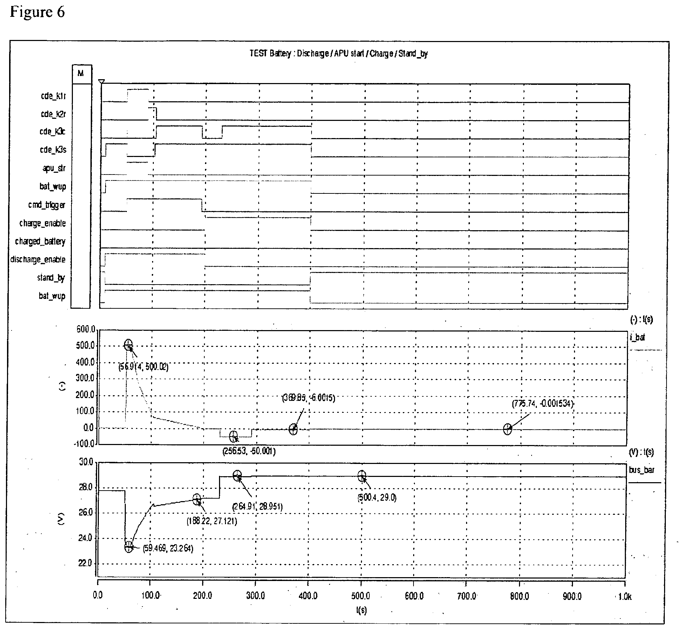

Les graphes de la figure 6 illustrent une simulation du système électronique selon l'invention dans une phase de démarrage de l'application puis de recharge de la batterie et de mise en mode « stand-by ». La simulation de la figure 6 a été réalisée avec un système électronique tel qu'illustré sur la figure 4. Le premier graphe montre l'état des commutateurs : l'état « 0 » correspond à une position ouverte du commutateur et l'état « 1 » correspond à une position fermée du commutateur. Le deuxième commutateur de décharge K4 et le commutateur de sécurité K2' ne sont pas représentés car leur état reste le même sauf dans des cas limites d'état de charge très faible ou de défaillance des autres commutateurs, comme expliqué plus haut. Le deuxième graphe montre le courant fourni par la batterie et le troisième graphe montre la tension aux bornes de la batterie.

La batterie est initialement chargée à sa pleine capacité ; elle a une tension sensiblement égale à celle du réseau 28V de l'alimentation principale de l'application et elle ne fournit ni ne reçoit aucun courant. Le chargeur est interrompu (commutateur K3C en position ouverte) et le commutateur de décharge K2 est en position ouverte. En revanche, le commutateur de charge K3S est en position fermée ; en cas d'appel en courant de l'application, avant même que l'un des commutateurs de décharge K1 ou K2 soit actionné, une décharge sera possible à travers la diode D3 du circuit de charge 30. La charge de la batterie reste cependant impossible tant que le commutateur du chargeur K3C n'est pas activé. Une disponibilité en courant immédiate est ainsi assurée.

Pour un démarrage de l'unité auxiliaire de puissance APU, l'unité électronique de contrôle va commander la fermeture du troisième commutateur de décharge K1 pour autoriser la circulation d'un courant de forte amplitude et l'ouverture du commutateur de charge K3S pour éviter tout retour de courant vers la batterie. Lorsque l'appel en courant diminue, en deçà de 100A par exemple, le premier circuit de décharge 20 prend le relais sur le troisième circuit de décharge 10 pour fournir l'énergie électrique à l'application ; le premier commutateur de décharge K2 est actionné en position fermée et le troisième commutateur de décharge K1 est actionné en position ouverte. La décharge peut être conduite à de très fortes puissances relativement à la charge, sans interruption de puissance lorsque la batterie est sollicitée. La dissymétrie des courants disponibles en charge par rapport à la décharge est due à l'électrochimie Li-ion et à la possibilité de dépôt de lithium lors de charges trop rapides, qui réduirait considérablement ses performances et sa durée de vie.

Lorsque le démarrage de l'APU est terminé et que l'alimentation principale de l'application est activée, la batterie peut être rechargée. Le commutateur de décharge K2 est replacé en position ouverte, le commutateur de charge K3S est actionné en position fermée. Le commutateur du chargeur K3C sera activé si la tension du réseau est supérieure à la tension de la batterie. La charge de la batterie devient alors possible depuis le réseau de l'alimentation principale. La charge est régulée par la fermeture et l'ouverture du commutateur K3C du chargeur alors que le commutateur de charge K3S reste en position fermée. Une fois que la batterie a atteint un état de charge SOC de 100%, la charge est interrompue et le système électronique est placée en mode « stand-by » avec les commutateurs K1, K2, K3S et K3C en position ouverte. Seul le deuxième commutateur de décharge K4 reste en position fermée en mode « stand-by ».

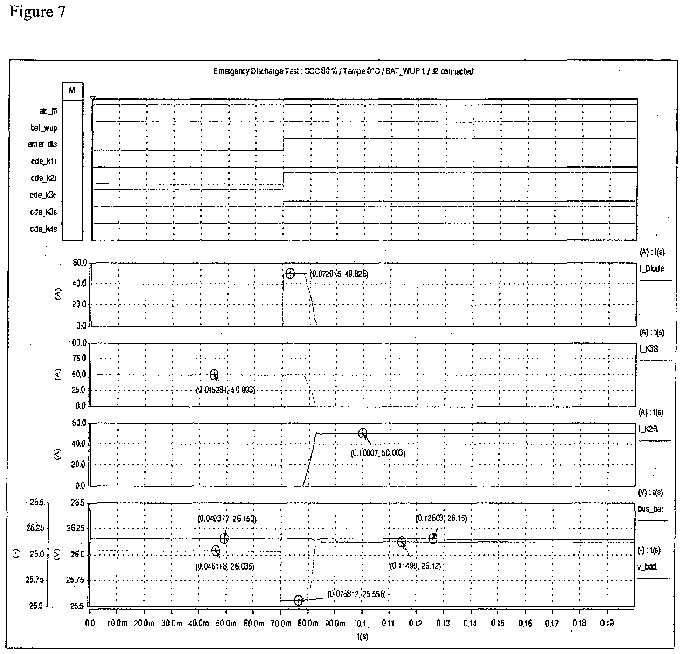

Les graphes de la figure 7 illustrent une simulation du système électronique selon l'invention dans une phase de mode secours de l'application. La simulation de la figure 6 a été réalisée avec un système électronique tel qu'illustré sur la figure 4. Le premier graphe montre l'état des commutateurs, le deuxième graphe montre le courant fourni à travers la diode de transition, le troisième graphe montre le courant à travers la branche de charge, le quatrième graphe montre le courant à travers la branche de décharge, et le dernier graphe montre la tension aux bornes de la batterie.

La batterie est initialement chargée avec un SOC de 80% ; le chargeur maintient la charge (commutateur K3C en position fermée), le commutateur de charge K3S est en position fermée et le commutateur de décharge K2 est en position ouverte. Lorsqu'une défaillance de l'alimentation principale est détectée, par exemple lorsque l'unité électronique de contrôle détecte une chute de tension dans le réseau électrique principal (comme illustré sur le dernier graphe) ou reçoit tout autre signal d'alarme, l'unité électronique de contrôle va commander la fermeture du commutateur de décharge K2 et l'ouverture du commutateur du chargeur K3C pour stopper la charge. Un courant de décharge aura cependant déjà pu circuler de la batterie vers l'application dès la chute de tension de l'alimentation principale, avant même que la fermeture du commutateur de décharge K2 soit effective, grâce à la diode D3 du circuit de charge 30. Une disponibilité immédiate en courant depuis la batterie est ainsi assurée pendant une période transitoire de 10 à 20 ms. Le circuit de charge 30 ne permet cependant pas le passage de courants forts. Lorsque le commutateur de décharge K2 est en position fermée, le courant circule à travers le circuit de décharge 20 qui a une impédance plus faible que le circuit de charge 30.

Tant que l'unité électronique de contrôle détecte un mode secours, elle maintient le commutateur de charge K3S en position ouverte et elle inhibe toutes les sécurités de la batterie afin de ne pas freiner la disponibilité en courant de la batterie de secours.

Dans certaines situations, le potentiel de l'application peut devenir supérieur au potentiel de la batterie alors que le mode secours est toujours actif, par exemple parce que la batterie atteint un état de charge relativement bas par rapport à la tension d'alimentation principale. La batterie pourrait alors passer dans une phase de charge avec une circulation de courant depuis l'application vers la batterie à travers la ligne de puissance du circuit de décharge 20.

On cherche à éviter une telle situation. Pour cela, l'unité électronique de contrôle, si elle détecte un potentiel de la batterie plus faible que celui du réseau de l'application alors qu'un mode secours est actif, va actionner l'ouverture du commutateur de décharge K2 afin d'empêcher la recharge de la batterie depuis l'application dont l'alimentation principale est défaillante. Dès que la décharge redevient possible, avant même que le commutateur de décharge K2 ne soit refermé, l'énergie électrique de la batterie est à nouveau disponible à travers la diode du circuit de charge D3. Toute discontinuité de disponibilité de puissance est ainsi évitée.

En outre, lorsqu'un état de charge SOC inférieur à 20% est détecté, l'unité électronique commande l'ouverture de tous les commutateurs de la batterie, y compris le deuxième commutateur de décharge K4 afin d'interdire la sur-décharge des cellules de la batterie.

La batterie de secours selon l'invention peut ainsi être maintenue dans un état de charge proche de 100% en permanence à partir de l'alimentation principale de l'application, tant qu'elle n'est pas sollicitée dans sa fonction de secours ou pour un démarrage de l'APU. Une application particulière d'une telle batterie de secours peut être envisagée pour des aéronefs et notamment pour des drones de grande envergure qui requiert une grande capacité ; la batterie de secours peut être chargée par l'alimentation principale de l'aéronef tant que celle-ci est opérationnelle et peut délivrer une énergie électrique à l'aéronef dès que nécessaire sans discontinuité de puissance.

Les modes de réalisation décrits ci-dessus et les figures doivent être considérées comme ayant été présentés à titre illustratif et non restrictif, et l'invention n'est pas censée être limitée aux détails fournis ici mais peut être modifiée en restant dans le cadre de la portée des revendications annexées.

## Revendications

1. Système électronique pour batterie rechargeable à accumulateur électrochimique étanche (7) de type Lithium-Ion et destinée à fournir une énergie électrique à une application comprenant une alimentation principale, le système électronique comprenant:
- un circuit de charge (30) de la batterie comprenant un chargeur (K3C), le circuit de charge étant une branche bidirectionnelle ;
- un premier circuit de décharge (20) de la batterie parallèle au circuit de charge (30) et comprenant un commutateur de décharge (K2) ;
- une diode de décharge (D3) disposée dans le circuit de charge (30) en parallèle du chargeur (K3C) ;
- une unité électronique de contrôle adaptée à commander l'ouverture et la fermeture du commutateur de décharge (K2) et adaptée à contrôler le chargeur (K3C);
dans lequel l'unité de contrôle:
- assure un maintien de la charge de la batterie tant que celle-ci n'est pas sollicitée en décharge ;
- interrompt la charge de la batterie et actionne le commutateur de décharge (K2) en position fermée lorsqu'une sollicitation de l'application est détectée, et dans lequel la diode de décharge (D3) permet un passage d'un courant de décharge durant une phase de transition de fermeture du commutateur de décharge (K2).

2. Système électronique selon la revendication 1, dans lequel le circuit de charge (30) comprend en outre un commutateur de charge (K3S) disposé en série avec le chargeur, la diode (D3) permettant la décharge de la batterie lorsque le commutateur de charge (K3S) est en position fermée et le chargeur interrompu.

3. Système électronique selon l'une des revendications 1 à 2, dans lequel le circuit de charge (30) ne permet pas un passage de courant supérieur à 80A.

4. Système électronique selon l'une des revendications 1 à 3, dans lequel l'unité de contrôle actionne le commutateur de décharge (K2) en position ouverte lorsque le potentiel de la batterie devient inférieur au potentiel de l'application.

5. Système électronique selon l'une des revendications 1 à 4, comprenant en outre un deuxième circuit de décharge (40) de la batterie parallèle au premier circuit de décharge (20) et comprenant un deuxième commutateur de décharge (K4) maintenu en position fermée, une résistance (R) limitant le passage du courant de décharge et une diode (D4) interdisant la charge de la batterie à travers le deuxième commutateur de décharge (K4).

6. Système électronique selon la revendication 5, dans lequel la résistance (R) du deuxième circuit de décharge (40) limite le courant de décharge à 5A.

7. Système électronique selon la revendication 5 ou 6, dans lequel le deuxième commutateur de décharge (K4) est maintenu en position fermée tant que l'état de charge de la batterie est supérieur à 20%.

8. Système électronique selon l'une des revendications 1 à 7, comprenant en outre un troisième circuit de décharge (10) de la batterie parallèle au premier circuit de décharge (20) et comprenant un troisième commutateur de décharge (K1) actionné en position fermée lorsqu'une phase de démarrage de l'application est détectée.

9. Système électronique selon la revendication 8, dans lequel le troisième commutateur de décharge (K1) permet un passage de courant supérieur à 1500A

10. Système électronique selon l'une des revendications 1 à 9, comprenant en outre un commutateur de sécurité (K2') disposé en série avec le circuit de charge (30) et en série avec le premier circuit de décharge (20) et actionné en position ouverte lorsqu'une situation dangereuse pour l'utilisateur de la batterie est détectée.

11. Système électronique selon les revendications 7 et 10, dans lequel le commutateur de sécurité (K2') est disposé en parallèle avec le deuxième circuit de décharge (40).

12. Batterie (1) rechargeable comprenant :
- au moins un accumulateur électrochimique étanche (7)
- un système électronique selon l'une des revendications 1 à 11.

13. Batterie selon la revendication 12, dans laquelle l'accumulateur étanche est de type Lithium-Ion.

## Patentansprüche

1. Elektronisches System für eine wiederaufladbare Batterie mit abgedichtetem elektrochemischen Akkumulator (7) vom Typ des Lithium-Ionen-Akkumulators und die dazu bestimmt ist, elektrische Energie zu einer Anwendung zuzuführen, umfassend eine Hauptstromversorgung, wobei das elektronische System aufweist:
- einen Ladestromkreis (30) der Batterie, umfassend ein Ladegerät (K3C), wobei der Ladestromkreis ein bidirektionaler Zweig ist,
- einen ersten Entladestromkreis (20) der Batterie, der parallel zu dem Ladestromkreis (30) ist und einen Entladeschalter (K2) aufweist,
- eine Entladediode (D3), die in dem Ladestromkreis (30) parallel zu dem Ladegerät (K3C) geschaltet ist,
- eine elektronische Steuereinheit, die geeignet ist, das Öffnen und das Schließen des
Entladeschalters (K2) zu steuern und geeignet ist, das Ladegerät (K3C) zu steuern, wobei die Steuereinheit:
- ein Halten der Ladung der Batterie gewährleistet, solange die Batterie nicht beim Entladen belastet wird,
- das Laden der Batterie unterbricht und den Entladeschalter (K2) in geschlossener Position betätigt, wenn eine Belastung der Anwendung erfasst wird und wobei die Entladediode (D3) einen Durchgang eines Entladestroms während einer Übergangsphase des Schließens des Entladeschalters (K2) ermöglicht.

2. Elektronisches System nach Anspruch 1, wobei der Ladestromkreis (30) ferner einen Lastschalter (K3S) aufweist, der mit dem Ladegerät in Reihe geschaltet ist, wobei die Diode (D3) das Entladen der Batterie ermöglicht, wenn der Lastschalter (K3S) in geschlossener Position ist und das Ladegerät unterbrochen ist.

3. Elektronisches System nach einem der Ansprüche 1 bis 2, wobei der Ladestromkreis (30) einen Stromdurchgang von über 80 A nicht ermöglicht.

4. Elektronisches System nach einem der Ansprüche 1 bis 3, wobei die Steuereinheit den Entladeschalter (K2) in geöffneter Position betätigt, wenn das Potential der Batterie niedriger als das Potential der Anwendung wird.

5. Elektronisches System nach einem der Ansprüche 1 bis 4, ferner umfassend einen zweiten Entladestromkreis (40) der Batterie, der parallel zu dem ersten Entladestromkreis (20) ist und einen zweiten Entladeschalter (K4) aufweist, der in geschlossener Position gehalten wird, wobei ein Widerstand (R) den Durchgang des Entladestroms begrenzt und wobei eine Diode (D4) das Laden der Batterie durch den zweiten Entladeschalter (K4) untersagt.

6. Elektronisches System nach Anspruch 5, wobei der Widerstand (R) des zweiten Entladestromkreis (40) den Entladestrom auf 5A begrenzt.

7. Elektronisches System nach Anspruch 5 oder 6, wobei der zweite Entladeschalter (K4) in geschlossener Position gehalten wird, solange der Ladezustand der Batterie höher als 20 % ist.

8. Elektronisches System nach einem der Ansprüche 1 bis 7, ferner umfassend einen dritten Entladestromkreis (10) der Batterie, der parallel zu dem ersten Entladestromkreis (20) ist und einen dritten Entladeschalter (K1) aufweist, der in geschlossener Position betätigt wird, wenn eine Startphase der Anwendung erfasst wird.

9. Elektronisches System nach Anspruch 8, wobei der dritte Entladeschalter (K1) einen Stromdurchgang von über 1.500 A ermöglicht.

10. Elektronisches System nach einem der Ansprüche 1 bis 9, ferner umfassend einen Sicherheitsschalter (K2'), der mit dem Entladestromkreis (30) in Reihe geschaltet ist und mit dem ersten Entladestromkreis (20) in Reihe geschaltet ist und in geöffneter Position betätigt wird, wenn eine Situation erfasst wird, die für den Benutzer der Batterie gefährlich ist.

11. Elektronisches System nach Anspruch 7 und 10, wobei der Sicherheitsschalter (K2') mit dem zweiten Entladestromkreis (40) parallel geschaltet ist.

12. Wiederaufladbare Batterie (1), umfassend:
- mindestens einen abgedichtetem elektrochemischen Akkumulator (7)
- ein elektronisches System nach einem der Ansprüche 1 bis 11

13. Batterie nach Anspruch 12, wobei der abgedichtetem Akkumulator vom Typ des Lithium-Ionen-Akkumulators ist.

## Claims

1. An electronic system for a rechargeable sealed lithium ion type cell (7) battery designed to supply electrical power to an application that includes a main power supply, the electronic system comprising:
- a battery charging circuit (30) comprising a charger (K3C), the charging circuit being a bi-directional branch.;
- a first battery discharging circuit (20) in parallel with said charging circuit (30) and comprising a discharge switch (K2);
- a discharge diode (D3) arranged in the charging circuit (30) in parallel with the charger (K3C);
- an electronic control unit adapted to control opening and closing of said discharge switch (K2) and adapted to control said charger (K3C);
in which the control unit:
- ensures trickle charging of the battery as long as it is not being called on to discharge;
- interrupts battery charging and sets said discharge switch (K2) to the closed position when a call for power is detected from the application,
and in which the discharge diode (D3) allows passage of a discharge current during a transitional phase of closing of said discharge switch (K2).

2. The electronic system according to claim 1, in which the charging circuit (30) further comprises a charging switch (K3S) provided in series with the charger , the diode (D3) allowing the battery to discharge when said charging switch (K3S) is in the closed position and the charger is shut down.

3. The electronic system according to one of claims 1 to 2, in which the charging circuit (30) does not allow a current greater than 80A to pass.

4. The electronic system according to one of claims 1 to 3, in which the control unit sets the discharge switch (K2) to the open position when the battery voltage becomes lower than the voltage of the application.

5. The electronic system according to one of claims 1 to 4, further comprising a second battery discharging circuit (40) in parallel with the first battery discharging circuit (20) and comprising a second discharge switch (K4) maintained in a closed position, a resistor (R) limiting flow of discharge current and a diode (D4) preventing the battery charging via the second discharge switch (K4).

6. The electronic system according to claim 5, in which the resistor (R) of the second battery discharging circuit (40) limits discharge current to 5A.

7. The electronic system according to claim 5 or 6, in which the second discharge switch (K4) is maintained in a closed position as long as a battery state of charge is greater than 20%.

8. The electronic system according to one of claims 1 to 7, further comprising a third battery discharging circuit (10) in parallel with said first battery discharging circuit (20) and comprising a third discharge switch (K1) which is set to a closed position upon a starting up phase of the application being detected.

9. The electronic system according to claim 8, in which the third discharge switch (K1) allows a current greater than 1500A to flow.

10. The electronic system according to one of claims 1 to 9, further comprising a safety switch (K2') provided in series with said charging circuit (30) and in series with the first battery discharging circuit (20) and set to an open position when a situation dangerous to the user of the battery is detected.

11. The electronic system according to claims 7 and 10, in which the safety switch (K2') is arranged in parallel with the second battery discharging circuit (40).

12. A rechargeable battery (1) comprising:
- at least one sealed electrochemical cell (7)
- an electronic system according to one of claims 1 to 11.

13. The battery according to claim 12, in which the sealed cell is of the lithium ion type.
